# EUROPÄISCHE PATENTSCHRIFT

(11) **EP 3 002 105 B1**
(45) Veröffentlichungstag und Bekanntmachung des Hinweises auf die Patenterteilung: **13.03.2019**
(21) Anmeldenummer: 15188140.6
(22) Anmeldetag: 02.10.2015
(51) Int. Cl.: B29C 65/60, B29C 65/14, B29C 65/10

(54) **NIETSYSTEM**
RIVETING SYSTEM
SYSTEME DE RIVETAGE

(30) Priorität: 02.10.2014 DE 102014114379
(43) Veröffentlichungstag der Anmeldung: 06.04.2016
(73) Patentinhaber: SONOTRONIC Nagel GmbH, 76307 Karlsbad-Ittersbach (DE)
(72) Erfinder:
(74) Vertreter: Weickmann & Weickmann PartmbB

(56) Entgegenhaltungen:
- EP-A2- 0 965 400
- EP-A2- 1 104 223
- DE-B3-102004 039 192
- GB-A- 2 437 068
- JP-A- 2002 067 159
- JP-A- 2003 300 252
- NL-A- 9 100 546
- SU-A1- 1 445 979

## Beschreibung

### I. Anwendungsgebiet

Die Erfindung betrifft das Vernieten von Nietpins aus thermoplastischen Stoffen, insbesondere thermoplastischen Kunststoffen.

### II. Technischer Hintergrund

Zur Verbindung beispielsweise unterschiedlicher Kunststoffteile besteht eine der Möglichkeiten darin, solche Kunststoffteile gegeneinander zu vernieten, sofern wenigstens eines der Kunststoffteile aus einem thermoplastischen Kunststoff besteht.
Dies geschieht beispielsweise in der Automobilindustrie bei der Herstellung von mehrschichtigen Kunststoff-Verkleidungsteilen, beispielsweise den Türverkleidungen.
Eine sehr effiziente Methode, um Kunststoffnieten miteinander zu vernieten, stellt das Einbringen von Ultraschall-Schwingungen in den thermoplastischen Nietpin dar.

Ist der Nietpin jedoch Bestandteil der äußersten, später sichtbaren, Kunststoffschicht, so besteht häufig - abhängig von Material und Schichtdicke - das Problem, dass aufgrund der in den Nietpin eingebrachten Ultraschall-schwingungen sich auf der sichtbaren Außenfläche des den Nietpin tragenden Kunststoffteiles leichte Strukturveränderungen entstehen, die unter optischen Gesichtspunkten oft nicht akzeptabel sind.

In diesem Fall muss vom Nieten mittels Ultraschall auf ein anderes Nietverfahren gewechselt werden.

Etabliert hat sich hier ein Nieten, bei dem die Erwärmung des Nietpins konventionell mittels Wärmeeintrag erfolgt, vorzugsweise mittels Bestrahlen mit Infrarot-Licht. Auch die Erwärmung mittels Bestreichen des Nietpins durch Heißluft ist möglich, jedoch erfolgt dabei das Eindringen der Wärme von außen fortschreitend ins Innere des Nietpins, was abhängig von Struktur und Abmessung des Nietpins nachteilig sein kann gegenüber der besseren Absorption der Infrarot-Wärme auch im Inneren des Nietpins.

In diesem Zusammenhang ist es bekannt, eine Infrarot-Nieteinheit zu verwenden, bei der in einer zylindrischen Hülse sowohl die Infrarot-Lichtquelle als auch der Nietstempel untergebracht sind, und die Infrarot-Nieteinheit mit ihrer Stirnfläche lediglich einmal auf dem Nietpin aufgesetzt werden muss, woraufhin im Inneren der hülsenförmigen Nieteinheit zunächst die Infrarot-Lichtquelle aktiviert wird und den Nietpin bestrahlt und nach ausreichender Erwärmung des Nietpins der Nietstempel im Inneren gegen den Nietpin vorgeschoben wird und diesen zu einem verbreiterten Nietkopf verformt.

Dies erfordert während des Nietprozesses nur ein einziges Ansetzen der Nieteinheit am Nietpin, hat jedoch den Nachteil, dass durch die Unterbringung sowohl des Nietstempels als auch der Infrarotquelle die Infrarot-Nieteinheit einen relativ großen Durchmesser im Vergleich zum Durchmesser des Nietpins besitzt.

Dies ist angesichts der oft sehr beengten Platzverhältnisse an der Nietstelle nachteilig.

Dies hat auch den weiteren Nachteil, dass der Nietstempel während des Aufheizens des Nietpins ebenfalls der Wärme der Infrarotquelle ausgesetzt ist und sich aufheizt, was für das spätere schnelle Abkühlen des verformten Nietkopfs nachteilig ist.

Zusätzlich wird bei dieser Vorgehensweise - sofern mehrere Kunststoffnieten an einem Bauteil nacheinander vernietet werden müssen - häufig die Nieteinheit aufmontiert, und das Bauteil mit den mehreren Nietstellen nacheinander so verfahren, dass die einzelnen Nietstellen an der Nieteinheit positioniert werden.

Die bezüglich der vorliegenden Erfindung nächstgelegene Druckschrift im Stand der Technik, die DE 10 2004 039 192 B3 offenbart bereits eine Nietvorrichtung zum Vernieten jeweils eines Nietpins mit einem Grundkörper, einer Heizeinheit mit einer Wärmequelle und einer Stempeleinheit, die beide an dem Grundkörper angeordnet sind, wobei die Heizeinheit und die Stempeleinheit vom Grundkörper aus separat ausfahrbar in der gleichen Vorschubrichtung nebeneinander in einem Abstand gemessen von Mitte zu Mitte der Heizeinheit einerseits und der Stempeleinheit andererseits angeordnet sind, und der Grundkörper gegenüber einem Sockel in Querrichtung zur Vorschubrichtung verstellbar um den Abstand befestigt ist. Eine ähnliche Nieteinheit ist auch in der NL 9 100 546 A beschrieben. Verfahren zum Betrieb ähnlicher Nieteinheiten werden in der EP 0 965 400 A2, der JP 2003/300252 A, der SU 1 445 979 A1, der JP 2002/067159 A, der GB 2 437 068 A und der EP 1 104 223 A2 beschrieben.

### III. Darstellung der Erfindung

### a) Technische Aufgabe

Es ist daher die Aufgabe gemäß der Erfindung, eine vor allem hinsichtlich des Durchmessers quer zur Vorschubrichtung des Nietstempels möglichst schmale Einheit zu schaffen, die auch an schlecht zugänglichen Vernietungsstellen ohne Kollisionsprobleme an den Nietpin heran gebracht werden kann.

### b) Lösung der Aufgabe

Diese Aufgabe wird durch die Merkmale des Anspruchs 1 gelöst. Vorteilhafte Ausführungsformen ergeben sich aus den Unteransprüchen.

Heizeinheit und Stempeleinheit sind separat und unabhängig voneinander gegenüber einem Grundkörper in ihrer Vorschubrichtung ausfahrbar.

Die Heizeinheit und/oder die Stempeleinheit und/oder der Grundkörper sind in Vorschubrichtung länglich schlank ausgebildet, so dass ihre Länge in diese Richtung mindestens dem vierfachen, besser dem fünffachen, besser dem sechsfachen der größten radialen Erstreckung am freien Ende der jeweiligen Einheit beträgt.

Zusätzlich ist der Grundkörper gegenüber einem Sockel in derjenigen Querrichtung, in der Heizeinheit und Stempeleinheit beabstandet sind, verstellbar um diesen Abstand befestigt.

Dadurch kann die Nietvorrichtung zunächst mit der Heizeinheit fluchtend zu dem zu vernietenden Nietpin ausgerichtet werden, und nach dem Erwärmen des Nietpins der Grundkörper in Querrichtung gegenüber dem Sockel so verstellt werden, dass dann die Stempeleinheit mit dem nun erwärmten Nietpin fluchtet und diesen vernieten kann.

Durch die separat und nebeneinander angeordnete Ausbildung von Heizeinheit und Stempeleinheit kann jede der beiden Einheiten sehr schmal und schlank ausgebildet werden, und kann dadurch im ausgefahrenen Zustand den Nietpin erreichen auch bei sehr beengten Raumverhältnissen und Freiräumen um den Nietpin herum.

Aus diesem Grund beträgt der maximale Durchmesser der Heizeinheit und/oder der Stempeleinheit in irgendeiner Querrichtung zur Vorschubrichtung nicht mehr als der maximale Durchmesser des unverformten Nietpins zzgl. **8** mm, besser maximal zzgl. nur **6** mm, besser maximal nur zzgl. **5** mm, besser maximal nur zzgl. **4** mm.

In der Heizeinheit wird als Wärmequelle vorzugsweise eine Infrarot-Lichtquelle verwendet oder eine Heissluftquelle.

Die Heizeinheit, insbesondere wenn als Wärmequelle eine Infrarot-Lichtquelle verwendet wird, weist einen Kühlluft-Auslass auf, der vorzugsweise oberhalb der Wärmequelle angeordnet ist und die Kühlluft in eine nach unten, zur offenen Seite der Heizeinheit hin gerichtete, Austrittsrichtung abgegeben wird. Dadurch wird zum einen das umgebende Gehäuse gekühlt, und andererseits eine Überhitzung der Außenbereiche des Nietpins vermieden.

Die Heizeinheit ist in einem Gehäuse untergebracht, welches vorzugsweise aus einer Gehäusehülse besteht, die an ihrem vorderen Ende offen ist.

In der Gehäusehülse der Heizeinheit ist die Infrarot-Lichtquelle so weit hinten in der Gehäusehülse angeordnet, dass der Nietpin vorne in die Gehäusehülse eintauchen kann und dadurch die durch die Infrarot-Lichtquelle ebenfalls erwärmte Luft des Eintauchraums durch diese Gehäusehülse am Nietpin gehalten wird.

Die Infrarot-Lichtquelle gibt vorzugsweise kurzwelliges Infrarot-Licht ab, da ein solches Infrarot-Licht besonderes gut von thermoplastischen Kunststoffen absorbiert werden kann.

Vorzugsweise ist die Infrarot-Lichtquelle eine Quarzglasbirne, da diese einen hohen Wirkungsgrad besitzen.

Im Inneren der Gehäusehülse der Heizeinheit ist wenigstens ein Spiegel vorgesehen, um das Infrarot-Licht wunschgemäß an den Nietpin zu führen, insbesondere an die Umfangsfläche des Nietpins heranzuführen.

Die Heizeinheit kann ferner eine insbesondere verspiegelte Abdeckmaske querstehend zu axialer Richtung in der Gehäusegröße aufweisen, so dass diese dann besondere beim Erwärmen oberhalb der oberen freien Stirnfläche des Nietpins positioniert ist, um eine Überhitzung und insbesondere Aufschmelzung dieser oberen freien Stirnfläche zu vermeiden.

Falls der zu vernietende Nietpin hohl und stirnseitig offen ist, kann die Heizeinheit auch einen Tauchspiegel umfassen, der beim Annähern der Heizeinheit an den Nietpin in das Innere des hohlen Nietpins eintaucht, und dadurch auch die Innenumfangswände des Nietpins aufheizt durch entsprechende Lichtführung.

Auch die Stempeleinheit kann einen Kühlluft-Auslass aufweisen, so dass der Nietstempel entweder mit Kühlluft beströmt wird oder von Kühlluft durchströmt wird, damit das Abkühlen des zu einem Nietkopf verformten Nietpins schneller vor sich geht.

Das Ausfahren der Heizeinheit und/oder der Stempeleinheit gegenüber dem Grundkörper erfolgt vorzugsweise pneumatisch. Zu diesem Zweck sind diese Einheiten an jeweils einer oder zwei Kolbenstangen eines PneumatikZylinders befestigt, an der insbesondere bei der Stempeleinheit in Längsrichtung hintereinander zwei Pneumatik-Kolben befestigt sind, deren Wirkung sich addiert.

Da unterschiedlich gestaltete und auch in axialer Richtung unterschiedlich lange Nietpins mit der Nietvorrichtung bearbeitet werden sollen, die Kolbenstangen der Pneumatikzylinder jedoch bauart-bedingt immer den gleichen Vorschubweg zurücklegen, müssen sowohl die Stempeleinheit als auch die Heizeinheit eine axiale Einstellbarkeit gegenüber der sie jeweils tragenden Kolbenstange aufweisen.

Zu diesem Zweck ist der Nietstempel nicht direkt mit der Kolbenstange verbunden, sondern über eine dazwischen angeordnete Verlängerungsbuchse, wobei die Verbindung jeweils über in Vorschubrichtung, also der axialen Richtung, verlaufenden Gewindestangen erfolgt, sowohl zwischen Kolbenstange und Verlängerungsbuchse als auch zwischen Verlängerungsbuchse und Nietpin.

Durch Verschrauben bis zum Erreichen der gewünschten Axialposition und anschließendes Sichern z.B. mittels jeweils einer Kontermutter, kann die richtige Axialposition gewählt werden.

Bei der Heizeinheit wird vorzugsweise die Kühlluft für das Innere der Heizeinheit über die hohle Kolbenstange und eine zwischen Kolbenstange und der Heizeinheit vorhandene Verbindungsstange, die zu diesem Zweck als Verbindungsrohr ausgeführt ist, zugeführt.

Für eine Axialverstellung muss dieses Verbindungsrohr aber längenveränderlich sein, was durch eine Teleskopierbarkeit erfolgt, indem also das eine Teil des Verbindungsrohres im anderen verschoben werden kann bis zur gewünschten Axialposition und anschließend luftdicht verklemmt werden kann.

Zu diesem Zweck besitzt z.B. Der äußere Teil des teleskopierbaren Verbindungsrohres auf der Außenseite ein Außengewinde, und eine Schlitzung von der Seite her in Längsrichtung an dem Ende, von dem der andere Teil des Verbindungsrohres eingeschoben wird.

Durch Aufschrauben einer Mutter, vorzugsweise einer im Hut durchbohrten Hutmutter, wird der Längsschlitz im äußeren Teil des Verbindungsrohres radial zusammengepresst und klemmt dadurch das darin befindliche Innere, ungeschlitzte Teil des Verbindungsrohres.

Auch die elektrische Zuführung zur Heizeinheit, die sich außerhalb von Verbindungsrohr und Kolbenstange befindet, muss einen Längenausgleich durchführen können. Hierfür werden flexible elektrische Leitungen verwendet, die durch Schlaufenbildung einen solchen Längenausgleich zulassen. Um jedoch die Heizeinheit ganz von der sie tragenden Kolbenstange abnehmen zu können, ist in diese zuführenden elektrischen Leitungen eine Stecker-Buchsen-Verbindung eingesetzt, von der das eine Teil fest an der Kolbenstange oder einem zwischen der Kolbenstange und dem Verbindungsrohr angeordneten Koppelblock befestigt ist, sodass das andere Teil der Stecker-Buchsenverbindung abziehbar ist.

Das Verbindungsrohr ist mit einem Basiskörper der Heizeinheit verbunden, der auf seinem vorderen, freien Ende den Sockelkörper für die Infrarot-Lampe trägt, in deren vorderes Ende die Infrarot-Lichtquelle mittels ihrer Steckkontakte eingesteckt werden kann.

Der Sockelkörper weist Kühlluftdurchlässe auf, die in der vorderen, der Infrarot-Lichtquelle zugewandten, Stirnfläche enden und mit dem hohlen Verbindungsrohr in Verbindung stehen, sodass die Infrarot-Lichtquelle seitlich von der Kühlluft überströmt wird.

Die Heizeinheit weist ferner das bereits erwähnte hülsenförmige Gehäuse auf, welches am vorderen Ende eine freie Öffnung aufweist und am hinteren Ende ein Innengewinde, mit dem es auf ein entsprechendes Außengewinde des Basiskörpers und/oder des Sockelkörpers aufschraubbar ist.

Im Inneren des hülsenförmigen Gehäuses ist ein ebenfalls hülsenförmiger, mit seinem Außenumfang gerade in den Innenumfang des Gehäuses passender, auf der Innenseite verspiegelter, separater oder in das Gehäuse integrierter, Spiegel angeordnet, der im montierten Zustand die Infrarot-Lichtquelle umgibt. Der Spiegel reflektiert das von der Infrarot-Lichtquelle abgegebene Licht, sodass es nach mehrfacher Reflexion unterhalb der Infrarot-Lichtquelle auf den zu erwärmenden Nietpin trifft.

Auf einer Höhe unterhalb der Infrarot-Lichtquelle kann die querstehende Abdeckmaske angeordnet sein, die auf ihrer Oberseite und/oder ihrer Unterseite verspiegelt ist, und vorzugsweise als separates loses Teil zwischen einem oberen und einem unteren Teil des hülsenförmigen Spiegels angeordnet ist. Der gesamte hülsenförmige Spiegel sitzt nahe des freien Endes des hülsenförmigen Gehäuses auf einem radial nach innen ragenden und insbesondere ringförmig umlaufenden Vorsprung des Gehäuses auf.

Sowohl der hülsenförmige Spiegel als auch die Abdeckmaske bestehen vorzugsweise aus Glas.

Der Raum von der Abdeckmaske bis zum freien Ende des hülsenförmigen Gehäuses der Heizeinheit dient als Eintauchraum zum Eintauchen des freien Endes des Nietpins.

Die Nietvorrichtung wird zunächst im Ruhezustand - also mit Heizeinheit und Stempeleinheit zurückgefahrenen bis nahe an das Gehäuse des Grundkörpers der Mietvorrichtung - relativ zum Nietpin so herangefahren, dass die Vorschubrichtung der ausfahrbaren Heizeinheit mit der Erstreckungsrichtung des Nietpins fluchtet, die Heizeinheit aufgrund ihrer zurückgezogenen Stellung aber noch axial zu weit vom Nietpin entfernt ist um diesen aufheizen zu können.

Anschließend wird die Heizeinheit vom Grundkörper aus in Vorschubrichtung ausgefahren, und dadurch soweit an den Nietpin angenähert, dass dieser bei eingeschalteter Wärmequelle der Heizeinheit dadurch der Nietpin aufgeheizt wird.

Zu diesem Zweck taucht der Nietpin vorzugsweise teilweise in die offene Stirnseite des Gehäuses der Heizeinheit ein.

Nachdem die Wärmequelle der Heizeinheit ausreichend lang aktiviert war und dadurch der Nietpin ausreichend erwärmt ist, wird die Heizeinheit in Vorschubrichtung zurück in den Ruhezustand an den Grundkörper verfahren, so dass insbesondere die Heizeinheit außer Eingriff mit dem Nietpin gelangt und der Grundkörper mit Heizeinheit und Stempeleinheit in einer solchen Querrichtung um eine solche Distanz verfahren, dass danach die Vorschubrichtung der Stempeleinheit mit der Erstreckungsrichtung des erwärmten Nietpins fluchtet.

Nun kann die Stempeleinheit in Vorschubrichtung gegenüber dem Grundkörper, insbesondere aus dem vorne offenen Gehäuse heraus, soweit verfahren werden, dass das gewünschte Stauchen des Nietpins zu einem verbreiterten Nietkopf durch den Nietstempel der Stempeleinheit erfolgt.

Nach dem Zurückziehen der Stempeleinheit in die Ausgangsposition ist die Nietvorrichtung wieder einsatzfähig für das Vernieten des nächsten Nietpins, wobei es egal ist, ob das Bauteil mit den Nietpins bewegt wird oder die Nietvorrichtung.

Aufgrund der kleinen und kompakten Nietvorrichtung ist es jedoch wohl in den meisten Fällen sinnvoller, das meist sehr viel größere Bauteil z. B. in einer Vorrichtung passgenau und definiert positioniert ruhen zu lassen, und die Nietvorrichtung nacheinander mittels einer entsprechenden Handhabungseinheit, beispielsweise eines Roboterarmes, zu den einzelnen Nietpins zu verbringen.

### c) Ausführungsbeispiele

Ausführungsformen gemäß der Erfindung sind im Folgenden beispielhaft näher beschrieben. Es zeigen:
- Fig. **1a bis c**:: die Nietvorrichtung in unterschiedlichen Arbeits-Zuständen in Prinzipdarstellungen,
- Figur **2a**, **b**:: die Nietvorrichtung in Seitenansicht wie in Figur **1** a in der Grundstellung in zwei um **90** Grad verschiedenen Seitenansichten,
- Figur **2c**:: die Nietvorrichtung aus den Figuren **2** a, b in perspektivischer Ansicht,
- Figur **2d**:: die Nietvorrichtung aus den Figuren **2** a, b in Längsrichtung von dem vorderen Ende her betrachtet,
- Figur **3a**:: die Nietvorrichtung gemäß Figur **2** a im Längsschnitt,
- Figur **3b**:: Heizeinheit und Stempeleinheit aus Figur **3**a in vergrößerter Darstellung im Längsschnitt und

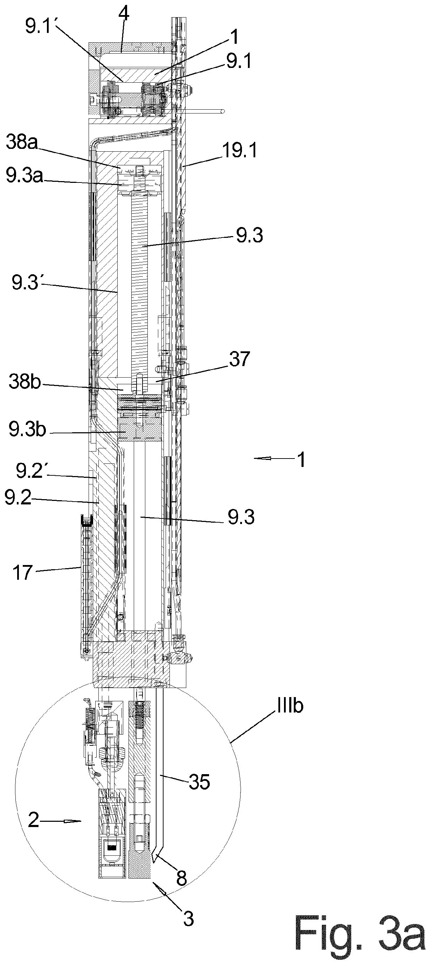

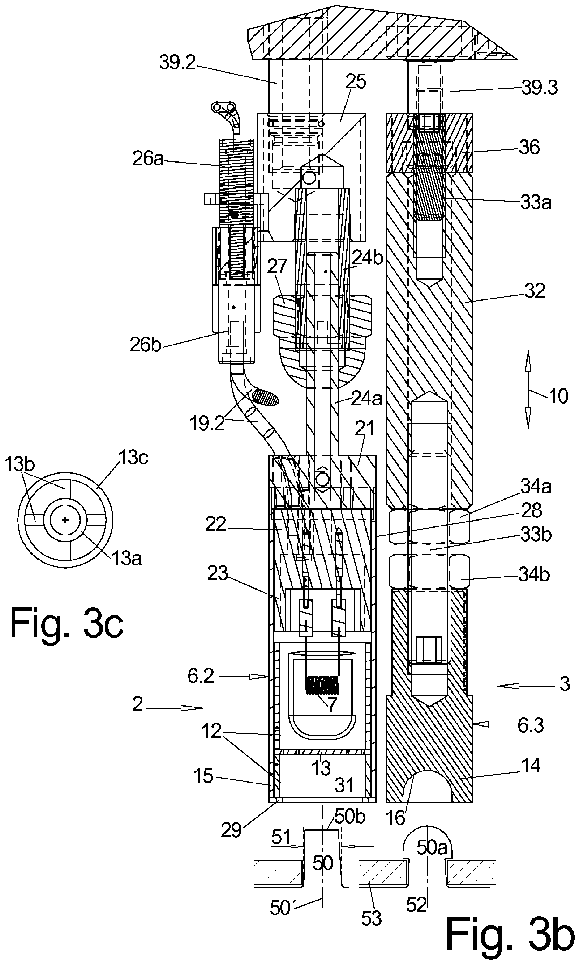

- Figur **3**c:: die Abdecktmaske in Einzeldarstellung.

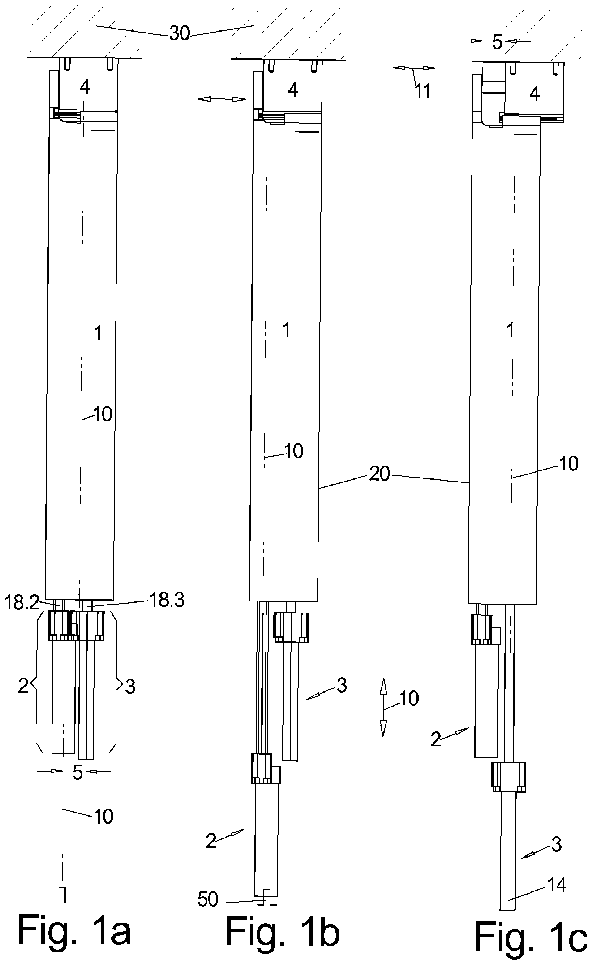

In den **Figuren 1 a, b, c** ist die Nietvorrichtung in ihren verschiedenen Betriebszuständen in einer Prinzipdarstellung - also ohne die in den übrigen Figuren sichtbaren, in der Praxis notwendigen, Details - dargestellt.

Die Nietvorrichtung besteht aus einem Grundkörper **1**, dessen größte Erstreckungsrichtung hier als Längsrichtung **10** bezeichnet wird. Dieser Grundkörper **1** ist mit seinem hinteren, hier oberen, Ende mit einem Sockel **4** beweglich verbunden, der seinerseits wiederum mit einem die ganze Nietvorrichtung tragenden Teil, sei es ein festes Maschinengestell oder eine bewegliche Handhabungseinheit **30 wie etwa ein Roboterarm,** verbunden ist.

Am vorderen, hier unteren, Ende des Grundkörpers **1** sind eine Heizeinheit **2** und eine Stempeleinheit **3**, die ebenfalls jeweils eine längliche, insbesondere stabförmige, in Längsrichtung **10** verlaufende Form aufweisen, nebeneinander befestigt, in einem Abstand **5** von Mitte zu Mitte, der zumindest an ihrem vorderen freien Ende in der Regel rotationssymmetrisch ausgebildeten Heizeinheit **2** und Stempeleinheit **3**.

Der Grundkörper **1** ist gegenüber dem Sockel **4** in derjenigen Richtung verfahrbar, in welcher der Abstand **5** zwischen Heizeinheit **2** und Stempeleinheit **3** besteht, und zwar insbesondere genau um diesen Abstand **5**.

Für die Zwecke der vorliegenden Anmeldung soll klargestellt werden, dass "oben" als Synonym für das hintere Ende, das Befestigungsende, des Grundkörpers **1** und der gesamten Nietvorrichtung steht, während "unten" für das vordere Ende, an der sich Heizeinheit und Stempeleinheit befinden, verwendet wird, denn die Nietvorrichtung kann natürlich auch mit anderer Orientierung, sei es waagrecht oder um **180**° gedreht, mit dem freien vorderen Ende nach oben oder zur Seite gerichtet, eingesetzt werden.

Die größte Erstreckungsrichtung von Heizeinheit **2** und Stempeleinheit **3** stimmt mit der größten Erstreckungsrichtung, der Längsrichtung **10**, des Grundkörpers **1** überein.

Heizeinheit **2** und Stempeleinheit **3** sind von ihrer Grundstellung aus, die in Figur **1a** dargestellt ist und in der sie sich mit ihrem hinteren Ende nahe der vorderen Stirnfläche des Grundkörpers **1** befinden, separat und unabhängig voneinander in Längsrichtung **10**, der Vorschubrichtung, ausfahrbar. Da Heizeinheit **2** und Stempeleinheit **3** jedoch einen wesentlich geringeren Querschnitt aufweisen als der Grundkörper 1, ist der zum Vernieten benötigte Raume radial um den Nietpin 50 herum oder in geringem Axialabstand zu dem Nietpin sehr viel geringer als bei fixer Montage von Heizeinheit 2 und Stempeleinheit 3 am oder im Grundkörper 1.

Zu diesem Zweck sind Heizeinheit **2** und Stempeleinheit **3** an jeweils einer Kolbenstange **18.2**, **18.3** montiert, die jeweils in einem in dem Grundkörper **1** ausgebildeten Pneumatikzylinder **9.2**, **9.3** axial verschieblich gelagert sind.

Da zum Vernieten eines Nietpins **50** dieser zunächst mittels der Heizeinheit **2** erwärmt und danach mittels der Stempeleinheit **3** gestaucht und an seinem Kopf verbreitert werden soll, wird für das Erwärmen von der Grundstellung der Figur **1** aus, in der die Längsmitte der Heizeinheit **2** bereits mit dem Nietpin **50** fluchtet, die Heizeinheit **2** soweit aus dem Grundkörper **1** ausgefahren, dass die am vorderen freien Ende hohl und hülsenförmig ausgebildete Heizeinheit **2** über einen Teil der axialen Länge des Nietpins **50**, dessen Längsrichtung bzw. Axialrichtung der Längsrichtung **10** der Nietvorrichtung entspricht, gestülpt wird und mittels der in der Heizeinheit **2** enthaltenen Wärmequelle **7** aufgeheizt wird.

Nachdem dies geschehen ist, wird die Heizeinheit **2** in Längsrichtung **10** in die Grundstellung zurückgefahren, der Grundkörper **1** um den Abstand **5** gegenüber dem Sockel **4** in Querrichtung **11** so verfahren, dass nunmehr die Stempeleinheit **3**, die an ihrem vorderen freien Ende den Nietstempel **14** trägt, mit dem erwärmten Nietpin **50** fluchtet.

Durch Ausfahren der Stempeleinheit **3** in Längsrichtung **10** erreicht der Nietstempel **14** die freie Stirnfläche des erwärmten Nietpins **50**, und durch weiteres Ausfahren in Längsrichtung **10** wird das freie Ende des Nietpins **50** durch die in der freien Stirnfläche des Nietstempels **14** enthaltene Kavität zu einem verbreiterten Nietkopf **50**a verformt.

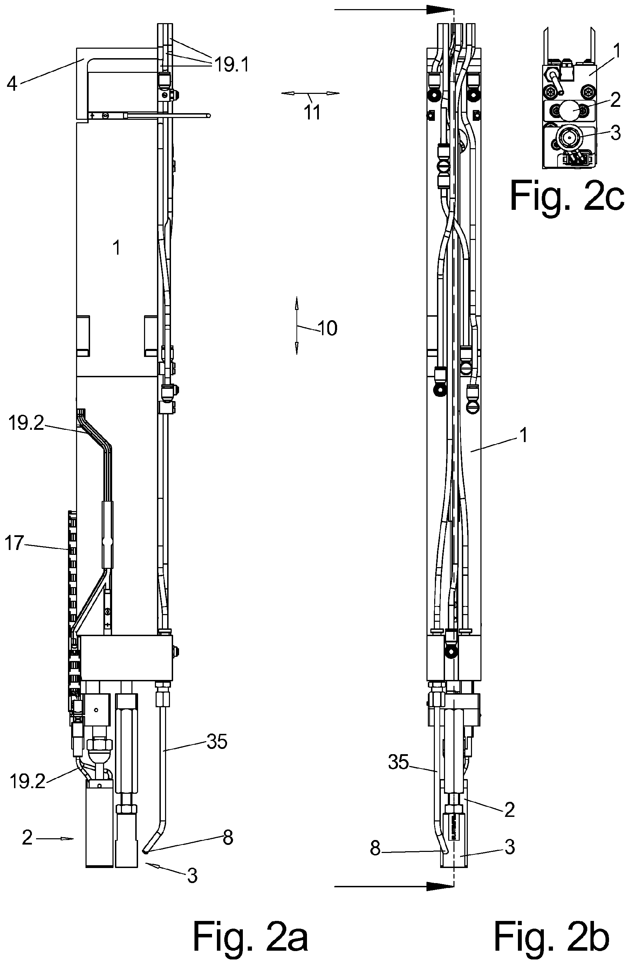

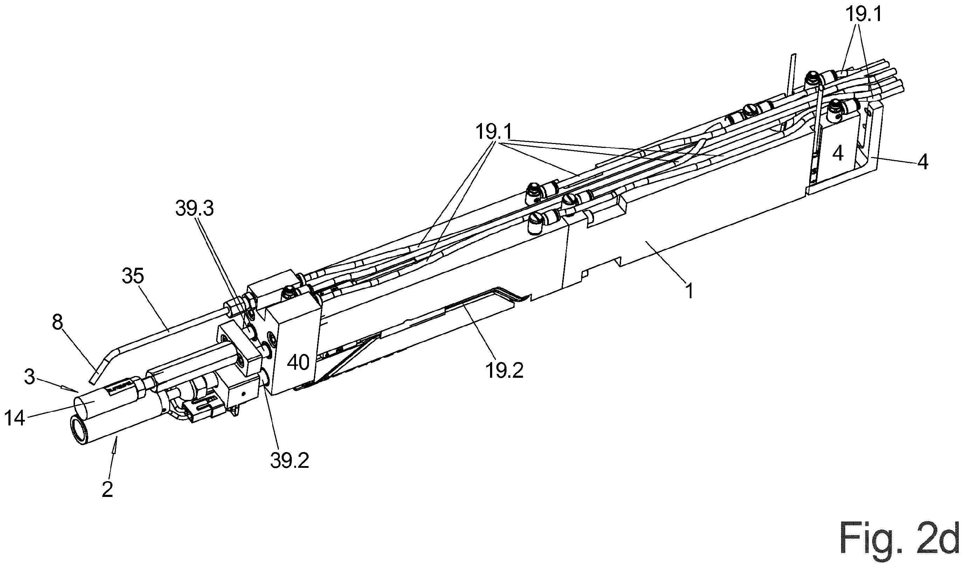

Dabei ist zu erkennen, dass Heizeinheit **2** und Stempeleinheit **3** - in den Seitenansichten gemäß der Figuren **2**a, **b** jeweils innerhalb der Breite des Grundkörpers **1** liegen und - wie Figur **2c** in der Ansicht in Längsrichtung **10** vom vorderen Ende her zeigt - auch innerhalb der Querschnittskontur des Grundkörpers **1** liegen und nicht über diesen hervorragen.

Die **Figuren 2a, b, c** zeigen eine Nietvorrichtung in einer konkreten Bauform in den **Figuren 2a, b** in zwei verschiedenen, um **90°** voneinander verschiedenen, Seitenansichten, in **Figur 2c** in axialer Ansicht von unten und in **Figur 2d** in perspektivischer Ansicht.

Wie die **Figuren 2a, b****,** **d** zeigen, sind an einer der Längsaußenflächen des Grundkörpers **1** die Zuführleitungen **19.1** für Kühlluft zum Kühlen der Heizeinheit **2** und/oder der Stempeleinheit **3**, sowie für Druckluft zum Betätigen der Pneumatikzylinder geführt, und in einer der angrenzenden LängsSeitenflächen die elektrischen Leitungen **19.2** zur Stromversorgung der elektrisch betriebenen Heizeinheit **2** untergebracht, insbesondere in dafür vorgesehenen Vertiefungen in der Außenfläche des Grundkörpers **1**, um diese elektrischen Leitungen vor Beschädigungen zu schützen.

Dabei ist das aus dem unteren Ende des Grundkörpers **1** in Längsrichtung **10** vorstehende und mit seinem gekröpften Ende mit der Kühlluft-Öffnung **8** auf den Nietstempel **14** zu weisende Kühlluftrohr **35** zu erkennen.

Da beim Ausfahren der Heizeinheit **2** die dorthin führenden elektrischen Leitungen **19.2** diese Ausfahrbewegung mitmachen müssen, sind diese Leitungen **19.2** in einer bekannten Schleppkette **17** untergebracht und geschützt, die an der den Leitungen **19.1** gegenüber liegenden Außenseite des Grundkörpers **1** angebracht ist.

Aus **Figur 2d** ist ersichtlich, dass die Stempeleinheit **3** am vorderen Ende nicht nur einer, sondern zweier parallel nebeneinander verlaufender, in einem Führungsblock **40** geführten, Führungsstangen **39.3** befestigt ist, deren hintere Enden mit nur einem gemeinsamen Pneumatik-Kolben **9.3** verbunden sind, der in dem Pneumatikzylinder **9.3'** in Vorschubrichtung **10** antreibbar ist und damit die Stempeleinheit **3** aus- und einfährt.

Ebenso ist die Heizeinheit **2** an den vorderen Enden zweier parallel angeordneter, in einem Führungsblock **40** geführten, Führungsstangen **39.2** befestigt, deren hintere Enden ebenfalls mit nur einem gemeinsamen Pneumatik-Kolben **9.2** verbunden sind, der in dem Pneumatikzylinder **9.2'** in Vorschubrichtung **10** antreibbar ist und damit die Heizeinheit **2** aus- und einfährt.

**Figur 3a** zeigt einen Längsschnitt durch die Nietvorrichtung, betrachtet in der gleichen Blickrichtung wie Figur **2**a:
Dabei ist der Pneumatikzylinder **9.3**', der die Stempeleinheit **3** in Vorschubrichtung **10** antreibt und in dieser Richtung auch die Kraft zum Verformen des erwärmten Nietpins aufbringen muss, wesentlich leistungsstärker ausgebildet als der Pneumatikzylinder **9.2**', der die Heizeinheit **2** in Vorschubrichtung bewegt, dabei jedoch lediglich deren Eigenmasse bewegen muss.

Zu diesem Zweck ist der in **Figur 3a** dargestellte, Pneumatikzylinder **9.3**' als doppelt wirkender Pneumatikzylinder ausgebildet, indem auf der Kolbenstange **9.3** axial hintereinander und beabstandet zueinander zwei Pneumatikkolben **9.3**a, **9.3**b angeordnet sind, und zum Ausfahren in Vorschubrichtung in den jeweiligen Arbeitsraum **38a, 38b** hinter diesen Pneumatikkolben **9.3**a, **9.3**b jeweils separat Druckluft eingebracht werden kann, so dass sich die von den beiden Pneumatikkolben **9.3**a, **9.3**b aufgebrachten Kräfte addieren.

Zu diesem Zweck ist in axialer Richtung zwischen den beiden Pneumatikkolben **9.3a**, **9.3b** eine Schottwand **37** angeordnet, die von der Kolbenstange **9.3** in dem Abschnitt, der sich zwischen den beiden Pneumatikkolben **9.3**a, **9.3**b befindet, dicht anliegend durchdrungen wird.

Bei den Pneumatikzylindern **9.2**' für die Heizeinheit ist dagegen der Pneumatikkolben **9.2** als einfache, in jeweils einem der Pneumatikzylinder **9.2**' verschiebbare, Kolbenstange **18.2** ausgebildet, wobei in den Zylinderraum hinter dem hinteren stirnseitigen Ende der Kolbenstangen **18.2** Druckluft einbringbar ist.

Die Einspeisungspunkte der Druckluft in die einzelnen Pneumatikzylinder in Form von Nippeln, die mit den entsprechenden Leitungen verbunden sind, sind am besten an Hand der **Figur 2**d zu erkennen.

Zusätzlich zeigt **Figur 3a****,** dass auch die Querverschiebung des Grundkörpers **1** gegenüber dem Sockel **4** mittels eines weiteren Pneumatikzylinders **9.1**' erfolgt, der in dem Sockel **4** in Verschieberichtung angeordnet ist, wobei der Pneumatikkolben **9.1**, der darin mittels Druckluft verschiebbar ist, mit dem Sockel **4** fest verbunden ist und der Pneumatikkolben **9.1'** im Grundkörper **1** ausgebildet ist.

**Figur 3b** zeigt den Bereich von Heizeinheit **2** und Stempeleinheit **3** der Nietvorrichtung im vergrößerten Längsschnitt in Blickrichtung der Figur **3**a:
Vorauszuschicken ist, dass die Größe, insbesondere auch die axiale Erstreckung, der zu bearbeitenden Nietpins **50**, wie in Figur **3**b beispielhaft unter der Stempeleinheit **3** dargestellt, variiert.

Der Nietpin **50** besteht im und verformten Zustand - wie in **Figur 3b** unter der Heizeinheit **2** dargestellt - aus einem von einem meist flächigen Nietbasisteil **52** aus vorstehenden, leicht konisch sich zum freien Ende hin verjüngenden, Zapfen, der meist rotationssymmetrisch im Querschnitt ist und an seiner Basis einen Durchmesser **51** aufweist. Das Fixierteil **53**, welches an dem Nietbasisteil **52** mittels des zu verformenden Nietpins **50** fixiert werden soll, besitzt eine entsprechende Durchgangsöffnung, durch die der Schaft des Nietpins **50** gerade hindurch passt.

Mittels des durch Verformung durch den Nietstempel **14** verbreiterten Nietkopf **50 a**, der danach vorzugsweise auf der Oberseite des Fixierteils **53** aufliegt und breiter ist als dessen Durchgangsöffnung, werden die Teile **52** und **53** dauerhaft zusammengehalten.

Die vom freien Ende des Nietpins 50 aus zu stauchende und zu einem Nietkopf 50a zu verformende Strecke kann bei jeder Anwendung anders sein und hängt unter anderem von der Dicke des Fixierteils 53 ab, welches von dem Niet 50 an dem Nietbasis Teil 52 fixiert werden soll.

Da im Grundkörper **1** die Pneumatikzylinder **9.2'**, **9.3'** immer den gleichen Vorschubweg zurücklegen, müssen sowohl die Stempeleinheit **3** als auch die Heizeinheit **2** hinsichtlich ihrer axialen Position zu den sie tragenden Kolbenstangen **18.2**, **18.3** einstellbar sein:
Die Heizeinheit **2** besteht aus einem Basiskörper **21**, an dessen vorderen Ende der Lampensockel **22** befestigt ist, und von dessen hinteren Ende ein teleskopierbares Verbindungsrohr **24** abragt. Das hintere Ende des Verbindungsrohres **24** endet in einem Koppelblock **25**, an dem andererseits das vordere Ende der hohlen Kolbenstange **18.2** dicht befestigt ist.

Über die hohle Kolbenstange **18.2**, die in Verbindung steht mit dem hohlen Verbindungsrohr **24**, wird Kühlluft durch den Basiskörper **21** und über Kühlluftkanäle **23** im Lampensockel **22** zur Vorderseite des Lampensockels **22** geleitet, und kühlt dort die Infrarot-Lichtquelle **7**. Diese besteht, wie üblich, aus einem Glaskörper, in dem sich die Glühwendel befindet und zwei nach hinten aus dem Glaskörper vorstehenden Steckkontakten, mit dem die Infrarot-Lichtquelle **7** in entsprechende Aufnahmen des Lampensockels **22** einsteckbar ist.

Die Positionseinstellung der Heizeinheit **2** gegenüber der Kolbenstange **18.2** erfolgt über das teleskopierbare Verbindungsrohr **24**:
Ein Teil **24**a davon, hier das innere teleskopierbare Teil, ist, vorzugsweise einstückig, mit dem Basiskörper **21** verbunden und ragt in das andere Teil **24**b hinein, welches dicht im Koppelblock **25** fixiert, beispielsweise verschraubt, ist.

Auf der Außenseite nahe des freien Endes des größeren Teiles **24**b des Verbindungsrohr **24** befindet sich ein Außengewinde, auf welchem eine Hutmutter **27** verschraubbar ist, in deren Hut eine Durchlassöffnung für das andere Teil **24**a vorhanden ist.

Nachdem die Teile **24** a, b relativ zueinander in die gewünschte Axialposition gebracht sind, wird die Hutmutter **27** auf dem Teil **24**b festgezogen, wodurch die beiden Teile **24**a, b des Verbindungsrohres **24** in radialer Richtung fest gegeneinander verklemmt werden, indem das äußere, größere Teil **24** b des Verbindungsrohres **24** in Längsrichtung von seinem freien Ende her geschlitzt ist. Die Mutter **27**, die nicht unbedingt eine Hutmutter sein muss, wird auf das Außengewinde geschraubt, wobei das Außengewinde und/oder das äußere, größere Teil **24** b dabei so beschaffen sind, vorzugsweise leicht konisch gestaltet sind, dass durch zunehmendes Aufschrauben der Mutter **27** das äußere Teil **24**b immer stärker radial zusammengepresst wird und das innere Teil **24**a des Verbindungsrohres **24**, welches nicht geschlitzt ist, immer stärker radial gegenüber dem äußeren Teil 2**4b** radial verklemmt wird.

Um den variablen Abstand zwischen Grundkörper **1** und Heizeinheit **2** auch bei der elektrischen Versorgung der Heizeinheit **2** zu realisieren, ist diese mittels flexibler elektrischer Leitungen **19.2** realisiert.

Dabei sind die vom Grundkörper **1** kommenden Leitungen **19.2** den von der Heizeinheit **2** kommenden elektrischen Leitungen **19.2** mittels einer elektrischen Steckverbindung gekoppelt, die sich etwa auf Höhe des Koppelblocks **25** befindet, indem in diesem Fall der elektrische Stecker **26a** fest seitlich an dem Koppelblock **25** angeordnet ist, während das elektrischen Strom zu der Heizeinheit **2** weiterführende Buchse **26b** zusammen mit der Heizeinheit **2** abgezogen und damit vom Grundkörper **1** gelöst werden kann, sobald die Klemmverbindung, die mittels der Hutmutter **27** für das Verbindungrohr **24** realisiert ist, ebenfalls gelöst ist.

Die Heizeinheit **2** umfasst ferner ein hülsenförmiges, insbesondere zylindrische des, Gehäuse **15** mit einem äußeren Durchmesser **6.2**, welches in seinem hinteren Bereich ein Innengewinde aufweist, mit welchem es auf ein Außengewinde **28** auf dem Außenumfang des Basiskörpers **21** und/oder Lampensockels **22** aufgeschraubt werden kann, deren Außenkontur in axialer Richtung betrachtet vorzugsweise nicht über die Außenkontur des Gehäuses **15** vorsteht.

Das hülsenförmige Gehäuse **15** besitzt an seinem vorderen freien Ende einen von der äußeren Hülse radial nach innen weisenden Vorsprung **29**, insbesondere in ringförmig umlaufender Form, sodass ein hülsenförmiger Spiegel **12**, der mit seinem Außenumfang gerade in den Innenumfang des hülsenförmigen Gehäuses **15** passt, auf diesem Vorsprung **29** als axialem Anschlag aufsitzt.

Vom Vorsprung **29** aus nach oben besteht der hülsenförmige Spiegel **12** aus zwei axial getrennten, aufeinanderfolgenden Teilen **12a, 12**b, die vorzugsweise beide den gleichen Innendurchmesser und den gleichen außen Durchmesser besitzen, und vorzugsweise aus Glas bestehen, und zwischen die in einer Querebene liegend eine Abdeckmaske **13** eingelegt ist, wie sie separat in axialer Richtung betrachtet in **Figur 3c** dargestellt ist:
Diese Abdeckmaske besteht - abhängig von Form und Größe des zu bearbeitenden Pins **50** - aus einem kreisscheibenförmigen oder ringförmigen Mittelteil **13a**, welches koaxial im hülsenförmigen Gehäuse **15** in einer Querebene liegt, und von dort nach außen ragenden Tragarmen **13b**, die soweit radial nach außen reichen und gegebenenfalls durch einen Außenring **13c** miteinander verbunden sein können, so dass die Abdeckmaske **13** auf der hinteren Stirnfläche des unteren Teils des hülsenförmigen Spiegels **12** aufliegen, und auf dieser Abdeckmaske **13** wiederum der obere Teil **12b** des hülsenförmigen Spiegels **12** aufsitzt.

Die Abdeckmaske **13** dient dazu, dass nicht zu viel Licht der Infrarot-Wärmequelle **7** direkt auf die freie Stirnfläche **50b** des Nietpins **50** aufgestrahlt wird, da diese sonst schmelzen oder verbrennen würde.

Die Form und der Abdeckungsgrad der Abdeckmaske **13** hängt daher von Form und Abmessungen sowie Material des Nietpins **50** ab.

Deshalb muss die Abdeckmaske **13** auch ohne Probleme und relativ schnell gewechselt werden können.

Zu diesem Zweck wird das hülsenförmige Gehäuse **15** vom Außengewinde **28** nach unten abgeschraubt, und durch Umdrehen des hülsenförmigen Gehäuses **15** rutscht zumindest der obere, längere, Teil **12b** des hülsenförmigen Spiegels **12** und die Abdeckmaske **13** heraus, sodass eine andere Abdeckmaske **13** eingelegt und danach wieder der obere, längere Teil **12b** des hülsenförmigen Spiegels **12** eingesetzt werden kann in das hülsenförmige Gehäuse **15**. Anschließend wird das hülsenförmige Gehäuse **15** von unten wieder auf das Außengewinde **28** aufgeschraubt.

Der Raum im hülsenförmigen Gehäuse **15** unterhalb der Abdeckmaske **13** ist der Eintauchraum **31**, der in Längsrichtung **10** so lang ist wie die axiale Erstreckung des zu erwärmenden Teils des Pins **50**. Auch die Längseinstellung der Heizeinheit **2** ist so gewählt, dass nach dem Ausfahren der Heizeinheit **2** in Vorschubrichtung **10** die Stirnfläche **50**b des Pins **50** möglichst knapp vor der Abdeckmaske **13** steht.

Die Strahlung der Infrarot-Lichtquelle **7** wird also am verspiegelten Innenumfang des oberen Teils **12b** des hülsenförmigen Spiegels **12** reflektiert und dringt früher oder später durch die Durchlässe in der Abdeckmaske **13** in den Eintauchraum **31** vor und erreicht damit - gegebenenfalls nach erneuter Reflektion an der verspiegelten Innenumfangsfläche des unteren Teils **12**a des hülsenförmigen Spiegels **12** - den von der Heizeinheit **2** umschlossenen Teil des Nietpins **50** und heizt diesen auf.

Die aus der vorderen Stirnfläche des Lampensockels **22** ausströmende Kühlluft strömt an der Infrarot-Lichtquelle **7** vorbei, durch die Durchlässe der Abdeckmaske **13** in den Eintauchraum **31** und aus dessen vorderer freier Öffnung heraus, und kühlt dabei einerseits die Infrarot-Lichtquelle **7**, heizt sich dabei auf, und erwärmt in diesem aufgeheizten Zustand zusätzlich den Nietpin **50**, indem sie an diesem entlang strömt.

Die Stempeleinheit **3** umfasst am vorderen freien Ende den Nietstempel **14**, in dessen vorderer Stirnfläche die Kavität **16** ausgebildet ist, die die Negativform des herzustellenden Nietkopfes **50**a ist.

Der Nietstempel **14** ist mit der Kolbenstange **18.3** über mehrere Zwischenelemente verbunden, insbesondere verschraubt, die eine Längsverstellung des Nietstempels **14** gegenüber der Kolbenstange **18.3** sogar an zwei axial getrennten Stellen zulassen:
Aus der am freien Ende der Kolbenstange **18.3** angeordneten Zwischenplatte **36** ragt entweder einstückig ausgebildet oder darin eingeschraubt eine erste Gewindestange **33**a hervor, die mit ihrem Außengewinde ihres einen Endes über eine gewünschte Länge in eine Sacklochbohrung mit Innengewinde in der oberen Stirnfläche einer Verlängerungsbuchse **32** eingeschraubt ist. Die so eingestellte Axialposition wird gesichert, indem die Verlängerungsbuchse **32 gegenüber der** Zwischenplatte **36** fest gezogen wird, was dadurch leicht möglich ist, dass die Verlängerungsbuchse **32 einen Außenumfang in Form eines Sechskants besitzt.**

Die Verlängerungsbuchse **32** besitzt auch in ihrem unteren Ende eine Sacklochbohrung mit Innengewinde, die wie die obere Sacklochbohrung mit Innengewinde in Längsrichtung **10** verläuft. In diese untere Sacklochbohrung ist eine weitere Gewindestange **33**b mit ihrem Außengewinde eingeschraubt, die mit ihrem anderen Ende in eine entsprechende Sacklochbohrung mit Innengewinde in der hinteren, also oberen, Stirnfläche des Nietstempels **14** eingeschraubt ist bis zur gewünschten Axialposition. Die Axialposition der Gewindestange **33**b sowohl zur Verlängerungsbuchse **32** hin als auch zum Nietstempel 14 hin wird durch jeweils eine Kontermutter 34a, b, gesichert, die ebenfalls auf dem Außengewinde der Gewindestange **33b** verschraubbar sind.

Unterhalb der Heizeinheit **2** ist der Nietpin **50** dargestellt, wie er das auf dem Nietbasisteil **52** aufgelegte, daran zu fixierende Fixierteil **53** durchdringt.

Unter der Stempeleinheit **3** ist der Niet mit dem bereits durch die Stempeleinheit **3** erzeugten verbreiterten Nietkopf **50**a dargestellt, der nun das Fixierteil **53** am Nietbasisteil **52** formschlüssig hält, indem der Nietkopf **50**a einen größeren Durchmesser besitzt als die Durchlassöffnung im Fixierteil **53**.

### BEZUGSZEICHENLISTE

- 1: Grundkörper
- 2: Heizeinheit
- 3: Stempeleinheit
- 4: Sockel
- 5: Abstand
- 6 2, 6.3: Durchmesser
- 7: Infrarot-Lichtquelle, Wärmequelle
- 8: Kühlluft-Auslass
- 9.1, 9.2, 9.3: Pneumatikkolben
- 9.1', 9.2', 9.3': Pneumatikzylinder
- 10: Längsrichtung, Vorschubrichtung
- 11: Querrichtung
- 12a, b: Spiegel
- 13: Abdeckmaske
- 13a: Mittelteil
- 13b: Fortsatz
- 14: Nietstempel
- 15: Gehäuse
- 16: Kavität
- 17: Schleppkette
- 18.2,18.3: Kolbenstange
- 19.1,19.2: Leitung
- 20: Gehäuse
- 21: Basiskörper
- 22: Lampensockel
- 23: Kühlluft-Kanal
- 24: Verbindungsrohr
- **25**: Koppelblock
- **26**a: Stecker
- **26**b: Buchse
- **27**: Hutmutter
- **28**: Außengewinde
- **29**: Vorsprung
- **30**: Handhabungs-Einheit
- **31**: Eintauchraum
- **32**: Verlängerungs- Buchse
- **33**: Gewindestange
- **34**a, b: Kontermutter
- **35**: Kühlluft-Rohr
- **36**: Zwischenplatte
- **37**: Schottwand
- **38**a, b: Arbeitsraum
- **39.2**, **39.3**: Führungsstange
- **40**: Führungsblock

- 50: Nietpin
- 50': Erstreckungsrichtung
- 50a: Nietkopf
- 50b: Stirnfläche
- 51: Durchmesser
- 52: Nietbasisteil
- 53: Fixierteil

## Patentansprüche

1. Nietsystem mit einer **Nietvorrichtung** und Nietpin (50), wobei die Nietvorrichtung zum Vernieten jeweils eines Nietpins (**50**) dient, mit
- einem Grundkörper (**1**),
- einer Heizeinheit (**2**) mit einer Wärmequelle (**7**) und
- einer Stempeleinheit (**3**), die beide an dem Grundkörper (**1**) angeordnet sind, wobei
- die Heizeinheit (**2**) und die Stempeleinheit (**3**) vom Grundkörper (**1**) aus separat ausfahrbar in der gleichen Vorschubrichtung (**10**) nebeneinander in einem Abstand (**5**) gemessen von Mitte zu Mitte der Heizeinheit (**2**) einerseits und der Stempeleinheit (**3**) andererseits, angeordnet sind,
- der Grundkörper (**1**) gegenüber einem Sockel (**4**) in Querrichtung (**11**) zur Vorschubrichtung (**10**) verstellbar um den Abstand (**5**) befestigt ist,
**dadurch gekennzeichnet, dass**
sowohl der maximale Durchmesser (6.2) der Heizeinheit (**2**) als auch der maximale Durchmesser (6.3) der Stempeleinheit (**3**) in Querrichtung (**11**) nicht größer als der maximale Durchmesser (**51**) des unverformten Nietpins (**50**) zuzüglich **8** mm ist.

2. Nietsystem nach Anspruch 1 **dadurch gekennzeichnet, dass**
in Vorschubrichtung (10) betrachtet der Querschnitt der Stempeleinheit (3) und der Querschnitt der Heizeinheit (2) innerhalb des Querschnittes des Gehäuses (20) des Grundkörpers (1) liegen.

3. Nietsystem nach Anspruch 1 **dadurch gekennzeichnet, dass**
der maximale Durchmesser (6.2) von der Heizeinheit (**2**) und/oder der maximale Durchmesser (6.3) der Stempeleinheit (**3**) in Querrichtung (**11**) nicht größer als der maximale Durchmesser (**51**) des unverformten Nietpins (**50**) ist zuzüglich **6** mm, besser zzgl. nur **5** mm, besser nur zzgl. **4** mm und/oder nicht größer als **30** mm, besser nicht größer **25** mm, besser nicht größer **20** mm ist.

4. Nietsystem nach einem der vorhergehenden Ansprüche **dadurch gekennzeichnet, dass**
die Heizeinheit (**2**) eine Infrarot-Lichtquelle (**7**) und/oder eine Heißluftquelle als Wärmequelle umfasst.

5. Nietsystem nach einem der vorhergehenden Ansprüche **dadurch gekennzeichnet, dass**
die Heizeinheit (**2**) einen Kühlluft-Auslass (**8**) umfasst, der insbesondere oberhalb der Infrarot-Lichtquelle (**7**) in der Gehäusehülse (**9**) angeordnet ist und eine nach unten gerichtete Austrittsrichtung der Kühlluft besitzt
und/oder
die Infrarot-Lichtquelle (**7**) kurzwelliges Infrarot-Licht abgibt,
und/oder
die Infrarot-Lichtquelle (**7**) eine Quarzglasbirne ist.

6. Nietsystem nach einem der vorhergehenden Ansprüche **dadurch gekennzeichnet, dass**
der Grundkörper (**1**) und/oder die Heizeinheit (**2**) und/oder die Stempeleinheit (**3**) in Vorschubrichtung (**10**) eine Länge besitzen, die mindestens dem vierfachen, besser dem fünffachen, besser dem sechsfachen der größten radialen Erstreckung am freien Ende der jeweiligen Einheit beträgt
und/oder
im Inneren der Gehäusehülse (**9**) wenigstens ein Spiegel (**12**) zur Führung des Infrarot-Lichts an den Nietpin (**50**), insbesondere an dessen Umfangsfläche heran, vorhanden ist.

7. Nietsystem nach einem der vorhergehenden Ansprüche **dadurch gekennzeichnet, dass**
die Heizeinheit (**2**) eine, insbesondere auf der zur Lichtquelle hin weisenden Seite verspiegelte, Abdeckmaske (**13**) vor der freien Seite der Wärmequelle, insbesondere oberhalb der oberen freien Stirnfläche (**50**b) des in die Heizeinheit (**2**) eingetauchten Nietpins (**50**), aufweist
und/oder
die Heizeinheit (**2**) einen Basiskörper (**21**) umfasst, der mit der Kolbenstange (**18.2**) verbunden ist sowie eine Spiegeleinheit, die einen hülsenförmigen, auf der Innenseite verspiegelten Spiegel (**12**) umfasst, der im montierten Zustand die Infrarot-Lichtquelle (**7**) umgibt und insbesondere aus Glas besteht.

8. Nietsystem nach einem der vorhergehenden Ansprüche **dadurch gekennzeichnet, dass**
das Ausfahren der Stempeleinheit (**3**) gegenüber dem Grundkörper (**1**) pneumatisch erfolgt, insbesondere mittels eines Pneumatikzylinders **(9.2'**, **9.3')** mit zwei axial hintereinander angeordneten Pneumatikkolben (**9'**), die auf einer Kolbenstange **(18.2, 18.3**) befestigt sind
und/oder
die Stempeleinheit **(3)** und/oder die Heizeinheit **(2)** gegenüber ihrer jeweiligen Kolbenstange **(18.2, 18.3)** axial verstellbar ist, insbesondere mittels Verschrauben und Fixieren entlang eines in Vorschubrichtung verlaufenden Gewindes und gegebenenfalls durch sichern mittels einer Kontermutter **(18.2, 18.3).**

9. Nietsystem nach einem der vorhergehenden Ansprüche **dadurch gekennzeichnet, dass**
aus der Heizeinheit **(2)** entgegen der Vorschubrichtung **(10)** aus der hinteren Stirnfläche ein teleskopierbares, zweiteiliges Verbindungsrohr **(24)** vorsteht, von der das eine Teil **(24**b) indirekt oder direkt an der hohlen Kolbenstange (**18.2**) fixiert ist und mit dieser strömungstechnisch verbunden ist und das andere Teil (**24**a) mit der Heizeinheit (**2**) verbunden ist und die beiden Teile (**24**a, **24**b) dicht ineinander axial verschiebbar und fixierbar sind, insbesondere mittels Zusammenpressen des äußeren der beiden Teile in axialer Richtung, welches insbesondere in dem zusammen zu pressenden Bereich in Längsrichtung (**10**) geschlitzt ausgebildet ist

10. Nietsystem nach einem der vorhergehenden Ansprüche **dadurch gekennzeichnet, dass**
der Sockelkörper (**22**) für die Infrarot-Lampe (**7**) Kühlluft-Durchlässe (**23**) aufweist, die am hinteren Ende mit dem Verbindungsrohr (**24**) in Verbindung stehen und in der vorderen Stirnfläche des Sockelkörpers (**22**) enden und die insbesondere als Nuten im Außenumfang des Sockelkörpers (**22**) ausgebildet sind.

11. Nietsystem nach einem der vorhergehenden Ansprüche **dadurch gekennzeichnet, dass**
in dem hülsenförmigen Spiegel (**12**) quer zur Vorschubrichtung (**10**) eine Abdeckmaske (**13**) mit Durchbrüchen angeordnet ist, die insbesondere auf der der Infrarot-Lichtquelle (**7**) zugeordneten Seite verspiegelt ist und insbesondere aus Glas besteht
und insbesondere
die Abdeckmaske (**13**) ein zentrales Mittelteil (**13**a) in Form eines Ringes oder einer Kreisscheibe besitzt, deren Außenumfang einen Abstand zu dem Innenumfang des hülsenförmigen Spiegel (**12**) einnimmt und über mehrere radial verlaufende Fortsätze (**13** b) mit diesem verbunden ist.

12. Nietsystem nach einem der vorhergehenden Ansprüche **dadurch gekennzeichnet, dass**
das hülsenförmigen Gehäuse (**15**) der Heizeinheit (**2**) am freien Ende einen nach innen gerichteten Vorsprung (**29**) aufweist, auf dem der hülsenförmige Spiegel (**12**) aufsitzt, der insbesondere aus zwei axial getrennten Teilen besteht, zwischen denen die Abdeckmaske (**13**) angeordnet ist.

13. Nietsystem nach einem der vorhergehenden Ansprüche **dadurch gekennzeichnet, dass**
das hülsenförmigen Gehäuse (**15**) der Heizeinheit (**2**) am hinteren Ende ein Innengewinde besitzt, mit dem es auf dem Basiskörper (**21**) aufgeschraubt ist und/oder
die Stempeleinheit (**3**) einen Kühlluft-Austritt (**8**) umfasst, so dass der Nietstempel (**14**) mit Kühlluft beströmt wird oder von Kühlluft durchströmt wird.

14. Nietsystem nach einem der vorhergehenden Ansprüche **dadurch gekennzeichnet,dass**
für hohle, stirnseitig offene, Nietpins (**50**) die Heizeinheit (**2**) einen Tauchspiegel zum Eintauchen in das Innere des hohlen Nietpins (**50**) aufweist.

## Claims

1. A riveting system, comprising a riveting device and a rivet pin (50), wherein the riveting device is configured to rivet a respective rivet pin (50), the riveting device comprising:
- a base element (1),
- a heating unit (2) with a heat source (7), and
- a plunger unit (3), wherein both are arranged at the base element (1),
- wherein the heating unit (2) and the plunger unit (3) are arranged separately extensible from the base element (1) in the same feed direction (10) adjacent to each other at a distance (5) measured from center to center of the heating unit (2) on the one hand side and from the plunger unit (3) on the other hand side,
- the base element (1) is attached so that it is adjustable by the distance (5) relative to a base (4) in a transversal direction (11) relative to the feed direction (10), **characterized in that**
- a maximum diameter (6.2) of the heating unit (2) as well as a maximum diameter (6.3) of the plunger unit (3) in transversal direction (11) is not greater than a maximum diameter (51) of the non-deformed rivet pin (50) plus 8 mm.

2. The riveting system according to claim 1,
**characterized in that**
a cross section of the plunger unit (3) viewed in the feed direction (10) and a cross section of the heating unit (2) are arranged within a cross section of the housing (20) of the base element (1).

3. The riveting system according to claim 1,
**characterized in that**
the maximum diameter (6.2) of the heating unit (2) and/or the maximum diameter (6.3) of the plunger unit (3) in the transversal direction (11) is not greater than a maximum diameter (51) of a non-deformed rivet pin (50) plus 6 mm, better plus 5 mm, better plus four millimeters, and/or not greater than thirty millimeters, better not greater than twenty-five millimeters, better not greater than twenty millimeters.

4. The riveting system according to one of the preceding claims,
**characterized in that**
the heating unit (2) includes an infrared light source (7) and a hot air source configured as a heat source.

5. The riveting system according to one of the preceding claims,
**characterized in that**
the heating unit (2) includes a cooling air outlet (8) that is arranged in particular above the infrared light source (7) in the housing sleeve (9) and that has a downward oriented cooling opening for the cooling air, and/or
the infrared light source (7) emits short wave infrared light, and/or
the infrared light source (7) is a quartz glass bulb.

6. The riveting system according to one of the preceding claims,
**characterized in that**
the base element (1) and/or the heating unit (2) and/or the plunger unit (3) have a length in the feed direction (10) that corresponds to at least four times, better five times, better six times a greatest radial extension at a free end of the respective unit and/or
at least one mirror (12) configured to guide the infrared light to the rivet pin (50), in particular to its circumferential surface is provided in an interior of the housing sleeve (9).

7. The riveting system according to one of the preceding claims,
**characterized in that**
the heating unit (2) includes a cover mask (13) that is provided with a mirror surface on a side oriented towards the light source and arranged in front of the free side of the heat source, in particular above the upper free face (50b) of the rivet pin (50) that is inserted into the heating unit (2), and/or the heating unit (2) includes a base element (21) that is connected with a piston rod (18.2) and a mirror unit that includes a sleeve shaped mirror (12) that includes a mirror surface on an inside and that envelopes the infrared light source (7) in a mounted condition and that is made in particular from glass.

8. The riveting system according to one of the preceding claims,
**characterized in that**
deploying the plunger unit (3) relative to the base element (1) is performed pneumatically, in particular by a pneumatic cylinder (9.2',9.3') with two pneumatic pistons (9') that are arranged on a piston rod (18.2, 18.3), and/or
the plunger unit (3) and/or the heating unit (2) is axially adjustable relative to its respective piston rod (18.2, 18.3), in particular by bolting and fixing along a thread that runs in the feed direction and optionally by securing with a counter-nut (18.2, 18.3)

9. The riveting system according to one of the preceding claims,
**characterized in that**
a telescoping two piece connection tube (24) protrudes from the heating unit (2), against the feed direction (10) from the rear face wherein a front piece (24b) is indirectly or directly fixed at the hollow piston rod (18.2) and flow connected there with and another piece (24a) is connected with the heating unit (2) and the two pieces (24a, 24b) are fixable inside each other in a tight and axially moveable manner, in particular by compressing the outer of the two pieces in an axial direction, wherein the outer piece is configured slotted in the longitudinal direction (10) in particular in the portion to be compressed.

10. The riveting system according to one of the preceding claims,
**characterized in that**
the base element (22) for the infrared lamp (7) incudes cooling air pass through openings (23) which are connected at a rear end with the connection tube (24) and terminate in the front face of the base element and that are configured in particular as grooves in the outer circumference of the base element (22).

11. The riveting system according to one of the preceding claims,
**characterized in that**,
a cover mask (13) with pass through openings is arranged in the sleeve shaped mirror (12) transversal to the feed direction (10) wherein the cover mask is provided with a mirror surface in particular on a side that is associated with the infrared light source (7), wherein the cover mask in the particular made from glass, and in particular
the cover mask (13) includes a center element (13a) configured as a ring or as a circular disk whose outer circumference is arranged at a distance from an inner circumference of the sleeve shaped mirror (12) and connected therewith by plural radially extending protrusion (13b).

12. The riveting system according to one of the preceding claims,
**characterized in that**
the sleeve shaped housing (13) of the heating unit (2) includes an inward oriented protrusion (29) at a free end wherein the sleeve shaped mirror contacts the inward oriented protrusion, wherein the sleeve shaped mirror is made from two axially separate components, wherein the cover mask is arranged between the two axially separate components.

13. The riveting system according to one of the preceding claims,
**characterized in that**
the sleeve shape housing (15) of the heating unit (2) has an inner thread by which the housing is threaded onto the base element (21), and/or
the plunger unit (3) includes a cooling air outlet (8) so that the rivet plunger (14) is flowed with cooling air or flowed through by cooling air.

14. The riveting system according to one of the preceding claims **characterized in that**, the heating unit (2) includes a penetration mirror for penetrating into an interior of hollow rivet pins (50) that are open at a face.

## Revendications

1. Système de rivetage avec un dispositif de rivetage et une tige de rivet (**50**), où le dispositif de rivetage sert à riveter une tige de rivet respective (**50**), avec
- un corps de base (**1**),
- une unité de chauffage (**2**) avec une source de chaleur (**7**) et,
- une unité de tampon (**3**) qui sont toutes les deux arrangées au corps de base (**1**), où
- l'unité de chauffage (**2**) et l'unité de tampon **(**3) sont arrangées de manière à être déplacée individuellement du corps de base (**1**) dans le même sens d'avance (**10**), l'une à côté de l'autre, avec une distance (**5**) mesurée du centre au centre de l'unité de chauffage (**2**) d'un côté et de l'unité de tampon (**3**) d'autre côté,
- le corps de base (**1**) est attaché de manière réglable par la distance (**5**) par rapport à un socle (**4**) dans le sens transversal (**11**) par rapport au sens d'avance (**10**),
**caractérisé en ce que**
le diamètre maximal (6.2) de l'unité de chauffage (**2**) ainsi que le diamètre maximal (6.3) de l'unité de tampon (**3**) dans le sens transversal (**11**) ne sont pas plus grands que le diamètre maximal (**51**) de la tige de rivet non déformée (**50**) plus **8** mm.

2. Système de rivetage selon la revendication 1,
**caractérisé en ce que**
vu dans le sens d'avance (**10**) la coupe transversale de l'unité de tampon (**3**) et la coupe transversale de l'unité de chauffage (**2**) se trouvent dans la coupe transversale du boîtier (**20**) du corps de base (**1**).

3. Système de rivetage selon la revendication 1,
**caractérisé en ce que**
le diamètre maximal (6.2) de l'unité de chauffage (**2**) et/ou le diamètre maximal (6.3) de l'unité de tampon (**3**) dans le sens transversal (**11**) ne sont pas plus grands que le diamètre maximal (**51**) de la tige de rivet non déformée (**50**) plus **6** mm, mieux plus seulement **5** mm, mieux plus seulement **4** mm et/ou ne pas plus grand que **30** mm, mieux ne pas plus grand que **25** mm, mieux ne pas plus grand que **20** mm.

4. Système de rivetage selon une des revendications précédentes,
**caractérisé en ce que**
l'unité de chauffage (**2**) comprend une source de lumière infrarouge (**7**) et/ou une source d'air chaud comme source de chaleur.

5. Système de rivetage selon une des revendications précédentes,
**caractérisé en ce que**
l'unité de chauffage (**2**) comprend une sortie d'air de refroidissement (**8**), qui est en particulier arrangée au-dessus de la source de lumière infrarouge (**7**) dans le manchon de boîtier (**9**) et comprend un sens de sortie de l'air de refroidissement dirigé vers le bas
et/ou
la source de lumière infrarouge (**7**) émet de la lumière infrarouge à ondes courtes,
et/ou
la source de lumière infrarouge (**7**) est une ampoule de verre de quartz.

6. Système de rivetage selon une des revendications précédentes,
**caractérisé en ce que**
le corps de base (**1**) et/ou l'unité de chauffage (**2**) et/ou l'unité de tampon (**3**) ont une longueur dans le sens d'avance (**10**) qui est égal à au moins quatre fois, mieux cinq fois, mieux six fois la plus grande extension radiale à l'extrémité libre de l'unité respective
et/ou
il y a à l'intérieur du manchon de boîtier (**9**) au moins un miroir (**12**) pour guider la lumière infrarouge à la tige de rivet (**50**), en particulier à sa surface circonférentielle.

7. Système de rivetage selon une des revendications précédentes,
**caractérisé en ce que**
l'unité de chauffage (**2**) comprend un dispositif de recouvrement (**13**) qui est en particulier à effet miroir sur son côté orienté vers la source de lumière, avant le côté libre de la source de chaleur, en particulier au-dessus de la surface frontale supérieure libre (**50b**) de la tige de rivet (**50**) immergée dans l'unité de chauffage (**2**),
et/ou
l'unité de chauffage (**2**) comprend un corps de base (**21**) lié à la tige de piston (**18.2**) ainsi qu'une unité de miroir comprenant un miroir (**12**) sous forme de manchon, miroité au côté intérieur, qui dans l'état monté entoure la source de lumière infrarouge (**7**) et est en particulier fait de verre.

8. Système de rivetage selon une des revendications précédentes,
**caractérisé en ce que**
le déplacement de l'unité de tampon (**3**) par rapport au corps de base (**1**) est réalisé de manière pneumatique, en particulier au moyen d'un cylindre pneumatique (**9.2', 9.3'**) avec deux pistons pneumatiques (**9'**) axialement successifs attachés sur une tige de piston (**18.2, 18.3**) et/ou
l'unité de tampon (**3**) et/ou l'unité de chauffage (**2**) sont réglables par rapport à leur tige de piston (**18.2, 18.3**) respective, en particulier par vissage et fixation le long d'un filetage s'étendant dans le sens d'avance et le cas échéant par un blocage au moyen d'un contre-écrou (**18.2, 18.3**).

9. Système de rivetage selon une des revendications précédentes,
**caractérisé en ce que**
un tube de liaison (**24**) télescopique en deux parties fait saillie de l'unité de chauffage (**2**) à l'encontre du sens d'avance (**10**) de la surface frontale arrière, dont une partie (**24**b) est fixée de manière indirecte ou directe à la tige de piston creuse (**18.2**) et est liée avec communication fluidique à cette dernière et dont l'autre partie (**24**a) est liée à l'unité de chauffage (**2**) et où les deux parties (**24**a, **24**b) peuvent être axialement encastrées et attachées l'une dans l'autre de manière étanche, en particulier en compressant la partie extérieure des deux parties dans le sens axial, cette partie étant formée avec une fente dans les sens longitudinal (**10**) dans la région à comprimer.

10. Système de rivetage selon une des revendications précédentes,
**caractérisé en ce que**
le corps de socle (**22**) comprend des passage d'air de refroidissement (**23**) pour la lampe infrarouge (**7**) qui à leur extrémité arrière communiquent avec le tube de liaison (**24**) et se terminent dans la surface frontale avant du corps de socle (**22**) et qui sont en particulier adaptés sous forme de rainures dans la circonférence extérieure du corps de socle (**22**).

11. Système de rivetage selon une des revendications précédentes,
**caractérisé en ce que**
un dispositif de recouvrement (**13**) avec des perçages est arrangé dans le miroir sous forme de manchon (**12**) transversalement au sens d'avance (**10**), qui est en particulier miroité sur le côté associé à la source de lumière infrarouge (**7**) et qui est en particulier fait de verre
et en particulier
**en ce que** le dispositif de recouvrement (**13**) comprend une partie centrale (**13**a) sous la forme d'un anneau ou d'un disque circulaire dont la circonférence extérieure a une distance à la circonférence intérieure du miroir sous forme de manchon (**12**) et est liée à celui-ci via plusieurs extensions radiales (**13**b).

12. Système de rivetage selon une des revendications précédentes,
**caractérisé en ce que**
le boîtier sous forme de manchon (**15**) de l'unité de chauffage (**2**) comprend à l'extrémité libre une saillie (**29**) dirigée vers l'intérieur sur laquelle se trouve le miroir sous forme de manchon (**12**), qui comprend en particulier deux parties séparées axialement, entre lesquelles le dispositif de recouvrement (**13**) est arrangé.

13. Système de rivetage selon une des revendications précédentes,
**caractérisé en ce que**
le boîtier sous forme de manchon (**15**) de l'unité de chauffage (**2**) comprend un filetage intérieur à l'extrémité arrière par lequel il est vissé sur le corps de base (**21**)
et/ou
l'unité de tampon (**3**) comprend une sortie d'air de refroidissement (**8**) de sorte que le tampon de rivetage (**14**) est entouré d'air de refroidissement ou de sorte que l'air de refroidissement passe à travers le tampon de rivetage.

14. Système de rivetage selon une des revendications précédentes,
**caractérisé en ce que**
l'unité de chauffage (**2**) comprend pour des tiges de rivet (**50**) creuses et ouvertes en surface frontale un miroir d'immersion pour l'immersion dans l'intérieur de la tige de rivet (**50**) creuse.
